# EUROPÄISCHE PATENTSCHRIFT

(11) **EP 0 798 177 B1**
(45) Veröffentlichungstag und Bekanntmachung des Hinweises auf die Patenterteilung: **17.05.2000**
(21) Anmeldenummer: 97104204.9
(22) Anmeldetag: 13.03.1997
(51) Int. Cl.: B60R 22/18

(54) **Fahrzeuginsassen-Rückhaltesystem mit einem Gurtstraffer**
Vehicle occupant restraint system including a belt tensioner
Système de retenue des occupants de véhicule avec un tendeur de sangle

(30) Priorität: 28.03.1996 DE 29605818 U
(43) Veröffentlichungstag der Anmeldung: 01.10.1997
(73) Patentinhaber: TRW Occupant Restraint Systems GmbH & Co. KG, 73551 Alfdorf (DE)
(72) Erfinder: Wier, Franz, 73571 Göggingen (DE)
(74) Vertreter: Degwert, Hartmut, Dipl.-Phys.

(56) Entgegenhaltungen:
- DE-U- 9 404 272
- US-A- 4 458 921

## Beschreibung

Die Erfindung betrifft ein Fahrzeuginsassen-Rückhaltesystem, mit einem Gurtstraffer, der im Kollisionsfall ein Gurtanlenkglied über ein Zugübertragungsglied verschiebt, und einem rohrförmigen Körper, der das Zugübertragungsglied in einem Bereich außerhalb des Gurtstraffergehäuses umgibt und bei betätigtem Gurtstraffer durch ein ortsfestes Gegenstück plastisch verformt wird.

Die Verlagerung des Gurtanlenkgliedes bei Aktivierung des Gurtstraffers ist prinzipiell durch den verfügbaren Hub des Gurtstrafferantriebs, beispielsweise eine Kolben/Zylinder-Einheit, begrenzt. Das Ende dieser Strecke wird durch einen Anschlag begrenzt, bei dessen Erreichen extrem hohe Verzögerungswerte auftreten. Alle Bestandteile des Systems müssen für die damit verbundenen hohen Belastungen dimensioniert werden.

Ein gattungsgemäßes Fahrzeuginsassen-Rückhaltesystem ist aus dem DE 94 04 272.1 U1 bekannt. Dabei ist eine Hülse vorgesehen, die ein am Kolben des Gurtstraffers befestigtes Zugseil mit dem Gurtschloß verbindet. Die Hülse dient als Aufprallabsorber, indem sie am Ende des Straffweges stirnseitig gegen die Seilumlenkung schlägt.

Durch die so angeordnete Hülse wird das gesamte Bauvolumen des Fahrzeuginsassen-Rückhaltesystems vergrößert.

Aufgabe der Erfindung ist es, ein klein bauendes Fahrzeuginsassen-Rückhaltesystem zu schaffen, bei dem am Ende des Straffweges eine wirksame Dämpfung für die bewegten Teile vorgesehen ist.

Diese Aufgabe wird bei einem Fahrzeuginsassen-Rückhaltesystem der eingangs genannten Art dadurch gelöst, daß das Gegenstück als gekrümmte Führung ausgebildet ist, in die der rohrförmige Körper bei betätigtem Gurtstraffer eindringt und dadurch gebogen wird. Im Gegensatz zu der beim Stand der Technik nach dem DE 94 04 272.1 U1 vorgesehenen Hülse wird der rohrförmige Körper beim erfindungsgemäßen Fahrzeuginsassen-Rückhaltesystem nicht durch einen Aufprall deformiert, sondern er dringt in eine gekrümmte Führung ein und wird darin gebogen. Der Abstand zwischen dem Gegenstück und dem Gurtanlenkglied kann dadurch im Vergleich zum Stand der Technik bei gleichem Straffweg verringert werden. Durch diese einfache, kostengünstige Dämpfung mittels des durch Biegen plastisch verformbaren rohrförmigen Körpers wird ein Teil der kinetischen Energie der bewegten Teile aufgenommen.

Gemäß einer bevorzugten Ausführungsform grenzt der rohrförmige Körper an das Außengehäuse des Gurtanlenkglieds an oder ist Teil desselben. Bei Betätigung des Gurtstraffers nimmt das Gurtanlenkglied somit den rohrförmigen Körper mit, um ihn in die gekrümmte Führung zu drücken, wo er verformt wird. Wenn der rohrförmige Körper Teil des Außengehäuses ist, sind zudem weniger Teile notwendig.

Vorzugsweise ist das Gurtanlenkglied als Gurtschloß ausgebildet, an welches der rohrförmige Körper angrenzt.

Darüber hinaus kann der rohrförmige Körper aber auch vom Gurtanlenkglied beabstandet und am Zugübertragungsglied befestigt sein, so daß das Gurtanlenkglied den rohrförmigen Körper nicht in die gekrümmte Führung drücken muß. Bei dieser Ausführungsform ist es vorteilhaft, wenn der rohrförmige Körper zu Beginn des Straffvorgangs bereits an die gekrümmte Führung angrenzt.

Das Gurtanlenkglied kann auch eine Seilkausche umfassen, an die der rohrförmige Körper gemäß einer weiteren Ausführungsform angrenzt. Dies ist dann vorteilhaft, wenn die Seilkausche aus dem Außengehäuse des Gurtanlenkglieds ragt.

Um zu verhindern, daß die durch den rohrförmigen Körper zu erzielende Dämpfung bei extremen Temperaturen, d.h. bei Temperaturen über 80°C und unter -30°C nur noch eingeschränkt oder überhaupt nicht vorhanden ist, besteht der rohrförmige Körper vorzugsweise aus Aluminium oder einem Leichtmetall. Kunststoffe, andere elastische Werkstoffe oder andere Metalle verändern ihre Eigenschaften im Gegensatz zu Aluminium oder Leichtmetall nämlich jenseits der obengenannten Extremtemperaturen so sehr, so daß die erwünschte Dämpfungswirkung im gewünschten Umfang ausbleibt. Der Verlauf der durch den rohrförmigen Körper aufgenommenen Kraft über den Straffweg ist bei Verwendung von Aluminium oder Leichtmetall besser als bei Verwendung einer Stahlhülse, wie sie offensichtlich bei dem Fahrzeuginsassen-Rückhaltesystem nach dem DE 94 04 272.1 U1 eingesetzt wird, so daß sich insgesamt eine bessere Dämpfungswirkung ergibt.

Die Geometrie des rohrförmigen Körpers ist weiter vorteilhafterweise so gewählt, daß die durch ihn aufgenommene Verformungsenergie über seinen Verformungsweg linear zunimmt. Dies begünstigt ein stetiges Verzögern des Gurtanlenkglieds in der Endphase seiner Bewegung durch den Körper, wodurch ungewollte Zerstörungen von Teilen des Rückhaltesystems vermieden werden können.

Gemäß weiterer bevorzugter Ausführungsformen ist vorgesehen, daß der rohrförmige Körper einen Abschnitt mit stetig abnehmender Wandungsdicke aufweist oder ein rohrförmiger, balgartiger Körper ist. Durch diese Geometrien ist es besonders einfach möglich, daß die Verformungsenergie, die der Körper aufnehmen kann, über seinen Verformungsweg linear ansteigt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine Seitenansicht, teilweise geschnitten des erfindungsgemäßen Fahrzeuginsassen-Rückhaltesystems gemäß einer ersten Ausführungsform,
Figur 2 den bei dem Fahrzeuginsassen-Rückhaltesystem nach Figur 1 eingesetzten rohrförmigen Körper,
Figur 3 das Fahrzeuginsassen-Rückhaltesystem nach Figur 1 in betätigtem Zustand,
Figur 4 eine vergrößerte Ansicht des in Figur 3 mit Y bezeichneten Bereichs des Fahrzeuginsassen-Rückhaltesystems,
Figur 5 ein rohrförmiger, konisch zulaufender Körper, der beim erfindungsgemäßen Rückhaltesystem einsetzbar ist, und
Figur 6 eine Seitenansicht des Rückhaltesystems gemäß einer zweiten erfindungsgemäßen Ausführungsform.

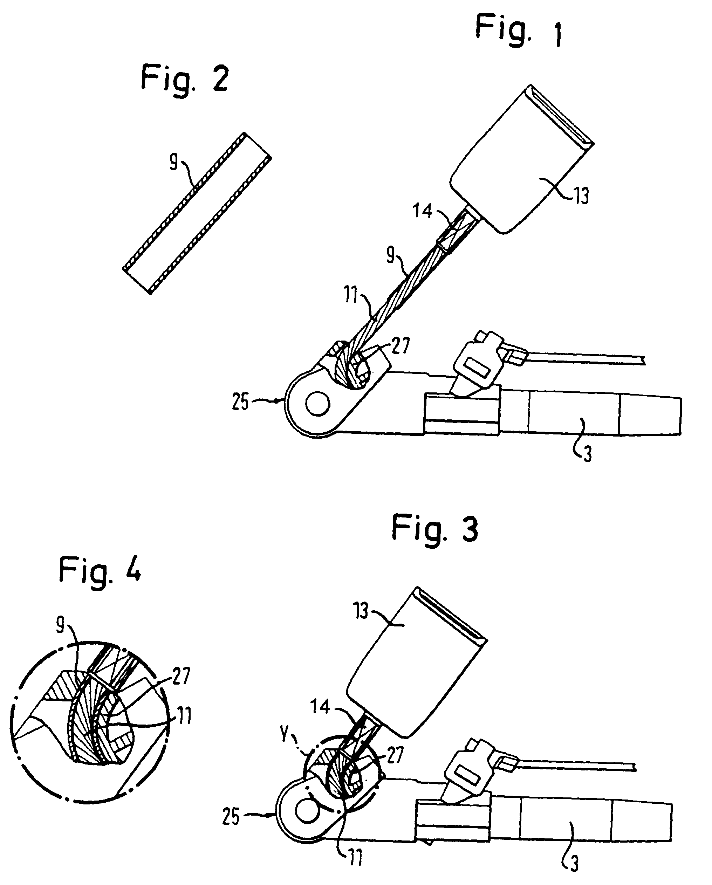

In Figur 1 ist ein Fahrzeuginsassen-Rückhaltesystem dargestellt, welches einen Gurtstraffer 3 umfaßt, der aus einer pyrotechnisch betätigbaren Kolben/ Zylinder-Einheit besteht. Ein Zugübertragungsglied 11 in Form eines Zugseils ist an einem freien Ende mit dem Kolben der Kolben/Zylinder-Einheit und an dem gegenüberliegenden freien Ende mit einem Gurtanlenkglied 13 in Form eines Gurtschlosses verbunden. An den Gurtstraffer 3 schließt sich eine Seilumlenkung 25 an, welche eine gekrümmte Führung 27 aufweist. Durch die Führung 27 wird das Zugübertragungsglied 11 schräg zur Längsachse des Gurtstraffers 3 gebogen, so daß das Gurtanlenkglied 13 zum besseren Einklinken einer Steckzunge im Fahrzeug schräg nach oben steht. Zwischen dem Gurtanlenkglied 13 und dem Gurtstraffer 3 ist ein rohrförmiger Körper 9, wie er in Figur 2 gezeigt ist, an einen Gehäusefortsatz 14 des Außengehäuses des Gurtanlenkglieds 13 angrenzend angeordnet, wobei er das Zugübertragungsglied 11 umgibt. Der rohrförmige Körper 9 ist aus Aluminium oder einem Leichtmetall.

Der Körper 9 kann entweder direkt an das Außengehäuse des Gurtanlenkglieds 13 oder gemäß Figur 1 an den schmalen Gehäusefortsatz 14, welcher eine Seilkausche abdeckt, oder direkt an eine Seilkausche angrenzen. Darüber hinaus ist es jedoch auch möglich, daß das Außengehäuse des Gurtanlenkglieds 13 den Körper 9 mit umfaßt, so daß die gemäß Figur 1 mit 13, 14 und 9 bezeichneten Teile einstückig miteinander verbunden sind.

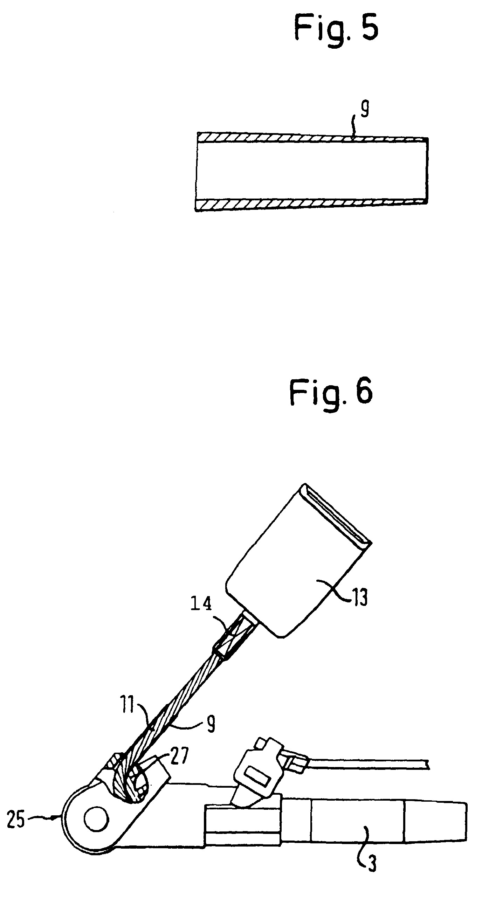

Der in Figur 5 gezeigte Körper 9 weist im Gegensatz zum Körper 9 gemäß Figur 2 einen Abschnitt mit stetig abnehmender Wandungsdicke auf, wodurch sich der Verlauf der Dämpfung, die durch elastisches Verformen des Körpers 9 erreicht werden soll, ändert.

Anhand von Figur 1 wird nun die Funktionsweise des Fahrzeuginsassen-Rückhaltesystems erklärt. Im Kollisionsfall wird der Gurtstraffer 3 betätigt, und der darin enthaltene Kolben zieht über das Zugübertragungsglied 11 das Gurtanlenkglied 13 näher an die Seilumlenkung 25 heran. Da der Körper 9 an den Gehäusefortsatz 14 angrenzt, nimmt bei dieser Bewegung das Gurtanlenkglied 13 den rohrförmigen Körper 9 mit und dieser wird in die gekrümmte Führung 27, die das Gegenstück bildet, geschoben und durch die Führung 27 gebogen. Die Führung 27 hat eine trichterförmige Öffnung zum Gurtanlenkglied 13 hin, um das Eindringen des Körpers 9 zu erleichtern. In der Endphase der Bewegung des Gurtanlenkgliedes 13 werden sämtliche bewegten Teile nicht mehr schlagartig, sondern durch das plastische Verformen des Körpers 9 langsam abgebremst, und ein Materialbruch, beispielsweise die Zerstörung des Zugübertragungsglieds 11 oder des Gurtanlenkglieds 13, wird vermieden. Die Wandungsdicke und -geometrie des Körpers 9 kann so auf die Geometrie der Führung 27 abgestimmt sein, daß sich eine vorbestimmbare, lineare Zunahme der Verformungsenergie über den Verformungsweg des Körpers 9 ergibt.

Durch Verwendung von Körpern mit anderen Geometrien lassen sich andere Verläufe der aufnehmbaren Verformungsenergie über den Verformungsweg erzielen.

Bei der in Figur 6 dargestellten Ausführungsform grenzt der Körper 9 nicht an den Gehäusefortsatz 14 an, sondern ist von diesem beabstandet und grenzt an die Führung 27 an. Der Körper 9 ist fest auf das Zugübertragungsglied 11 aufgepreßt.

Die zuvor beschriebenen Dämpfungsmöglichkeiten für Fahrzeuginsassen-Rückhaltesysteme verteuern diese Systeme nur geringfügig und wirken sich nicht nachteilig auf den nötigen Bauraum aus.

## Patentansprüche

1. Fahrzeuginsassen-Rückhaltesystem, mit einem Gurtstraffer (3), der im Kollisionsfall ein Gurtanlenkglied (13) über ein Zugübertragungsglied (11) verschiebt, und einem rohrförmigen Körper (9), der das Zugübertragungsglied (11) in einem Bereich außerhalb des Gurtstraffergehäuses umgibt und bei betätigtem Gurtstraffer (3) durch ein ortsfestes Gegenstück plastisch verformt wird, dadurch gekennzeichnet, daß das Gegenstück als gekrümmte Führung (27) ausgebildet ist, in die der rohrförmige Körper (9) bei betätigtem Gurtstraffer (3) eindringt und dadurch gebogen wird.

2. Fahrzeuginsassen-Rückhaltesystem nach Anspruch 1, dadurch gekennzeichnet, daß der rohrförmige Körper (9) an das Außengehäuse des Gurtanlenkglieds (13) angrenzt oder Teil desselben ist.

3. Fahrzeuginsassen-Rückhaltesystem nach Anspruch 1, dadurch gekennzeichnet, daß der rohrförmige Körper (9) vom Gurtanlenkglied beabstandet und am Zugübertragungsglied (11) befestigt ist.

4. Fahrzeuginsassen-Rückhaltesystem nach Anspruch 1 oder 2, dadurch gekennzeichnet, daß der rohrförmige Körper (9) an ein Gurtschloß als Gurtanlenkglied (13) angrenzt.

5. Fahrzeuginsassen-Rückhaltesystem nach Anspruch 1, dadurch gekennzeichnet, daß der rohrförmige Körper (9) an eine Seilkausche als Teil des Gurtanlenkglieds (13) angrenzt.

6. Fahrzeuginsassen-Rückhaltesystem nach einem der vorstehenden Ansprüche, dadurch gekennzeichnet, daß das Zugübertragungsglied (11) ein Zugseil ist.

7. Fahrzeuginsassen-Rückhaltesystem nach einem der vorstehenden Ansprüche, dadurch gekennzeichnet, daß der rohrförmige Körper (9) aus Aluminium oder einem Leichtmetall besteht.

8. Fahrzeuginsassen-Rückhaltesystem nach einem der vorstehenden Ansprüche, dadurch gekennzeichnet, daß die Geometrie des rohrförmigen Körpers (9) so gewählt ist, daß die durch ihn aufgenommene Verformungsenergie über seinen Verformungsweg linear zunimmt.

9. Fahrzeuginsassen-Rückhaltesystem nach einem der vorstehenden Ansprüche, dadurch gekennzeichnet, daß das Gegenstück Teil einer Seilumlenkung (25) ist.

10. Fahrzeuginsassen-Rückhaltesystem nach Anspruch 8 oder 9, dadurch gekennzeichnet, daß der rohrförmige Körper (9) einen Abschnitt mit stetig abnehmender Wandungsdicke aufweist.

## Claims

1. Vehicle occupant restraint system, including a belt pretensioner (3) which displaces a belt link element (13) via a tension transmission element (11) in the event of a collision, and a tubular body (9) which encompasses the tension transmission element (11) in an area outside the belt pretensioner housing and is plastically deformed by a stationary counterpart when the belt pretensioner (3) is actuated, characterized in that the counterpart is designed as a curved guide (27) into which the tubular body (9) penetrates and is, thus, bent when the belt pretensioner (3) is actuated.

2. Vehicle occupant restraint system in accordance with claim 1, characterized in that the tubular body (9) adjoins the outer housing of the belt link element (13) or is part of the latter.

3. Vehicle occupant restraint system in accordance with claim 1, characterized in that the tubular body (9) is spaced from the belt link element (13) and attached to the tension transmission element (11).

4. Vehicle occupant restraint system in accordance with claims 1 or 2, characterized in that the tubular body (9) adjoins a belt buckle as a belt link element (13).

5. Vehicle occupant restraint system in accordance with claim 1, characterized in that the tubular body (9) adjoins a rope socket as part of the belt link element (13).

6. Vehicle occupant restraint system in accordance with any of the above claims, characterized in that the tension transmission element (11) is a tension cable.

7. Vehicle occupant restraint system in accordance with any of the above claims, characterized in that the tubular body (9) is made of aluminium or light metal.

8. Vehicle occupant restraint system in accordance with any of the above claims, characterized in that the geometry of the tubular body (9) is selected in such a way that the deformation energy absorbed by it linearly increases over its deformation path.

9. Vehicle occupant restraint system in accordance with any of the above claims, characterized in that the counterpart is part of a cable deflector (25).

10. Vehicle occupant restraint system in accordance with claims 8 or 9, characterized in that the tubular body (9) has a section with steadily decreasing wall thickness.

## Revendications

1. Système de retenue des occupants d'un véhicule, comprenant un tendeur de ceinture (3) qui, en cas de collision, déplace un élément d'articulation de ceinture (13) par l'intermédiaire d'un élément de transmission de traction (11), et comprenant un corps tubulaire (9) qui entoure l'élément de transmission de traction (11) dans une zone située à l'extérieur du boîtier de tendeur de ceinture et qui, lorsque le tendeur de ceinture (3) est actionné, est déformé plastiquement par une pièce antagoniste fixe, caractérisé en ce que la pièce antagoniste est conçue sous la forme d'un guide courbe (27) dans lequel le corps tubulaire (9) pénètre et est ainsi cintré lorsque le tendeur de ceinture (3) est actionné.

2. Système de retenue des occupants d'un véhicule selon la revendication 1, caractérisé en ce que le corps tubulaire (9) est adjacent au boîtier extérieur de l'élément d'articulation de ceinture (13) ou en fait partie.

3. Système de retenue des occupants d'un véhicule selon la revendication 1, caractérisé en ce que le corps tubulaire (9) est distant de l'élément d'articulation de ceinture et est fixé à l'élément de transmission de traction (11).

4. Système de retenue des occupants d'un véhicule selon la revendication 1 ou 2, caractérisé en ce que le corps tubulaire (9) est adjacent à une serrure de ceinture faisant fonction d'élément d'articulation de ceinture (13).

5. Système de retenue des occupants d'un véhicule selon la revendication 1, caractérisé en ce que le corps tubulaire (9) est adjacent à une cosse de câble faisant partie de l'élément d'articulation de ceinture (13).

6. Système de retenue des occupants d'un véhicule selon l'une des revendications précédentes, caractérisé en ce que l'élément de transmission de traction (11) est un câble de traction.

7. Système de retenue des occupants d'un véhicule selon l'une des revendications précédentes, caractérisé en ce que le corps tubulaire (9) est réalisé en aluminium ou en métal allégé.

8. Système de retenue des occupants d'un véhicule selon l'une des revendications précédentes, caractérisé en ce que la géométrie du corps tubulaire (9) est choisie pour que l'énergie de déformation que celui-ci absorbe augmente linéairement sur sa course de déformation.

9. Système de retenue des occupants d'un véhicule selon l'une des revendications précédentes, caractérisé en ce que la pièce antagoniste fait partie d'un moyen de renvoi du câble (25).

10. Système de retenue des occupants d'un véhicule selon la revendication 8 ou 9, caractérisé en ce que le corps tubulaire (9) comporte une portion dont l'épaisseur de paroi décroît régulièrement.
